# FASCICULE DE BREVET EUROPEEN

(11) **EP 3 079 931 B1**
(45) Date de publication et mention de la délivrance du brevet: **07.03.2018**
(21) Numéro de dépôt: 14814926.3
(22) Date de dépôt: 13.11.2014
(51) Int. Cl.: F15B 11/08, F15B 20/00, B60K 6/12, B60K 6/46

(54) **CIRCUIT HYDRAULIQUE POUR VEHICULE HYBRIDE COMPORTANT UN CIRCUIT TRES HAUTE PRESSION ET DES MOYENS DE SECURITE EN CAS DE SURPRESSION**
HYDRAULIKSCHALTUNG FÜR EIN HYBRIDFAHRZEUG MIT EINER HOCHDRUCKSCHALTUNG UND EINER SICHERHEITSVORRICHTUNG FÜR DEN FALL VON ÜBERDRUCK
HYDRAULIC CIRCUIT FOR A HYBRID VEHICLE COMPRISING A VERY HIGH PRESSURE CIRCUIT AND SAFETY MEANS IN CASE OF OVERPRESSURE

(30) Priorité: 12.12.2013 FR 1362527
(43) Date de publication de la demande: 19.10.2016
(73) Titulaire: Technoboost, 75116 Paris (FR)
(72) Inventeur: LE DREN, Arnaud, F-91800 Brunoy (FR); ROY, Franck, F-91700 Fleury Merogis (FR)
(74) Mandataire: Rosenberg, Muriel Sylvie
(86) Numéro de dépôt international: PCT/FR2014/052887
(87) Numéro de publication internationale: WO 2015/086934

(56) Documents cités:
- EP-A1- 2 481 932
- AT-B- 395 960
- GB-A- 2 019 537
- US-A- 4 674 280
- US-A1- 2010 170 573

## Description

La présente invention concerne un circuit hydraulique pour la traction d'un véhicule automobile hybride, ainsi qu'un véhicule automobile hybride comprenant un tel circuit hydraulique.

Un type de transmission connu pour un véhicule automobile hybride hydraulique, présenté notamment par le document FR-A1-2973302, comporte un train planétaire comprenant trois éléments reliés à un moteur thermique, à une pompe hydraulique et à un différentiel de sortie entraînant les roues motrices. La transmission reçoit de plus une machine hydraulique pouvant travailler en moteur ou en pompe, qui peut être reliée au différentiel de sortie par plusieurs rapports de démultiplication.

Le circuit hydraulique peut comporter un circuit basse pression et un circuit haute pression comprenant chacun un accumulateur de pression qui permet de stocker une énergie, l'accumulateur basse pression maintenant un seuil de pression minimum pour éviter une cavitation des machines. Les pressions stockées sont restituées ensuite pour appliquer un couple moteur sur les roues. Un circuit hydraulique tel que décrit dans le préambule de la revendication 1 est décrit dans le document US 4 674 280 A. On obtient ainsi différents modes de fonctionnement comprenant un mode « impulsionnel » avec une traction du véhicule uniquement par la machine hydraulique, le moteur thermique étant arrêté, et un mode « dérivation » avec une traction du véhicule par le moteur thermique qui délivre par le train planétaire un couple à la fois sur le différentiel de sortie, et sur la pompe fournissant une puissance hydraulique.

Dans ce mode dérivation on a suivant la vitesse de rotation de la pompe, une infinité de rapports de démultiplication entre le moteur thermique et les roues motrices. On peut aussi ajouter dans ce mode un couple complémentaire de traction donné par la machine hydraulique.

On obtient aussi un mode « rapport court » avec la pompe arrêtée, le moteur thermique délivrant un couple élevé sur les roues motrices par le train planétaire formant un réducteur de vitesse, et un mode « rapport long » avec le moteur thermique délivrant un couple plus faible sur les roues motrices par le train planétaire qui est bloqué. On obtient de plus un mode « freinage » où la machine hydraulique travaillant en pompe délivre un couple de freinage du véhicule, en rechargeant les accumulateurs haute pression.

On peut en complément dans le mode dérivation isoler les deux machines de l'accumulateur haute pression pour travailler avec une très haute pression supérieure à la pression acceptable par cet accumulateur, entre la pompe délivrant le débit directement à la machine hydraulique fonctionnant en moteur. On obtient alors avec ces machines des couples et des puissances plus importants.

Un problème qui se pose alors pour ce type de circuit hydraulique comportant des machines qui peuvent être isolées d'un accumulateur de pression pour travailler entre elles, est qu'il faut assurer une sécurité en cas de surpression accidentelle sur le circuit très haute pression.

D'une manière générale il est nécessaire pour le circuit hydraulique d'un véhicule hybride relié à une transmission comportant des machines hydrauliques, notamment une transmission du type présenté ci-dessus, de répondre aux besoins particuliers importants pour les véhicules automobiles destinés à une production en grande série, comprenant une masse réduite, une bonne compacité, un très bon rendement, un niveau élevé de fiabilité et un coût réduit. Il faut donc prévoir un circuit optimisé qui tend à réduire le nombre de composants pour améliorer ces différents critères.

En particulier la place dans un véhicule est limitée, et sa masse a un effet direct sur la consommation d'énergie ainsi que sur son autonomie.

De plus le circuit hydraulique doit permettre une maintenance facile, et doit assurer dans tous les cas la sécurité, notamment en cas d'accident ou d'incendie.

La présente invention a notamment pour but d'éviter ces inconvénients de la technique antérieure.

Elle propose à cet effet un circuit hydraulique prévu pour un véhicule hybride disposant d'une machine hydraulique et d'une pompe liées à une transmission entraînant les roues du véhicule, et comprenant les caractéristiques de la revendication 1. Un avantage de ce circuit hydraulique est que l'on assure la sécurité du circuit très haute pression, tout en évacuant si nécessaire le fluide sous pression vers un deuxième circuit qui peut le recevoir et le stocker grâce à son accumulateur.

Le circuit hydraulique selon l'invention peut de plus comporter une ou plusieurs des caractéristiques suivantes, qui peuvent être combinées entre elles.

Selon un mode de réalisation, les moyens de sécurité comportent un disque de rupture qui s'ouvre pour un différentiel de pression dépassant une limite.

Avantageusement, le disque de rupture peut s'ouvrir pour des seuils de différentiels de pression qui changent suivant le sens, ce seuil étant plus élevé quand la pression du circuit de pression limitée est supérieure.

En particulier, le disque de rupture peut comporter une membrane séparant les deux circuits, reposant de chaque côté sur des cloisons de surfaces différentes pour obtenir un seuil de rupture différent.

Dans ce cas, le disque de rupture peut comporter un support de section circulaire, recevant à l'intérieur la membrane qui est en appui de chaque côté sur deux cloisons transversales disposant de perçages axiaux de diamètres différents.

Les moyens de sécurité peuvent aussi comporter un limiteur de pression calibré qui se décharge dans le circuit de pression limitée.

Les moyens de sécurité peuvent aussi comporter un clapet anti-retour taré bloquant le flux vers la très haute pression, qui s'ouvre dans l'autre sens à partir d'un écart de pression suffisant.

Avantageusement, la recharge du circuit de pression limitée pour compenser ses consommations permanentes, s'effectue par le circuit très haute pression en passant par une restriction de débit constamment ouverte.

L'invention a aussi pour objet un véhicule automobile hybride disposant d'une chaîne de traction utilisant l'énergie hydraulique, équipée d'un circuit hydraulique, ce circuit comprenant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est un schéma général d'un circuit hydraulique selon l'invention ;
- la figure 2 est un schéma d'un disque de rupture à la pression pour ce circuit ;
- la figure 3 est un schéma de ce circuit suivant une première variante ;
- la figure 4 est un schéma de ce circuit suivant une deuxième variante ; et
- La figure 5 est un schéma de ce circuit suivant une troisième variante.

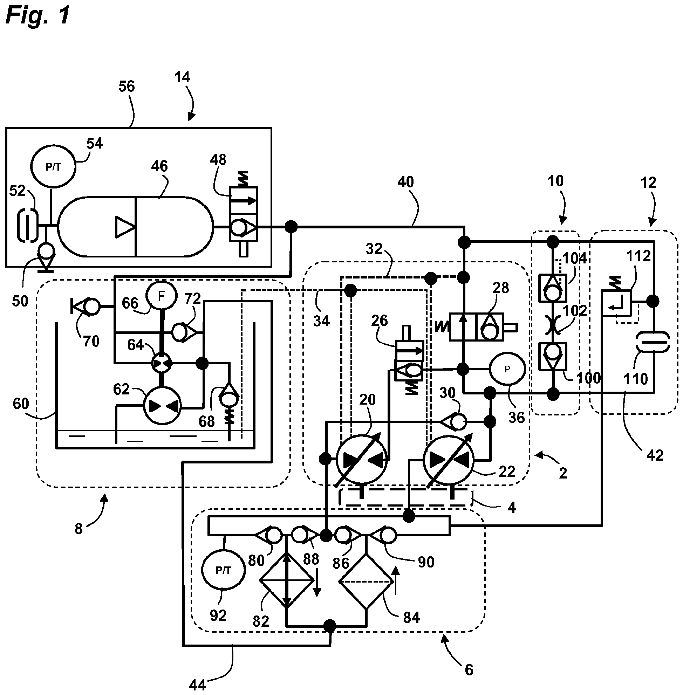

La figure 1 présente un premier bloc des machines 2 comprenant une pompe pouvant travailler en moteur 20 et un moteur hydraulique pouvant travailler en pompe 22, les arbres de ces machines à cylindrée variable étant reliés à une transmission 4 entraînant les roues motrices du véhicule. Le bloc des machines 2 comporte aussi les commandes de ces machines.

Le bloc des machines 2 est relié par un circuit haute pression limitée 40 à un bloc de stockage d'énergie sécurisé 14 comportant un accumulateur de pression 46. Ce bloc des machines 2 est relié aussi par un circuit très haute pression 42 et par le circuit haute pression limitée 40, à un bloc de conjonction-disjonction 10 ainsi qu'à un bloc de sécurité limitant les pressions 12.

La partie basse pression des deux machines 20, 22 du bloc des machines 2 est alimentée par un bloc filtre-échangeur 6, qui reçoit le fluide par un circuit basse pression 44 venant d'un bloc d'alimentation 8 comportant un réservoir à la pression atmosphérique 60.

Le bloc d'alimentation 8 comporte une pompe de gavage 62 puisant dans un réservoir à la pression atmosphérique 60, et refoulant dans le circuit basse pression 44 qui se raccorde en amont d'un filtre principal 84 et en aval d'un échangeur thermique 82 du bloc filtre-échangeur 6.

La pompe de gavage 62 maintient une pression minimum dans le circuit basse pression 44 afin d'éviter une cavitation de la pompe 20 et de la machine hydraulique 22, en particulier pour les grands débits.

Le circuit haute pression limitée 40 alimente un moteur hydraulique de petits puissance 64 qui entraîne directement la pompe de gavage 62, ce moteur refoulant son fluide dans le circuit basse pression 44.

On obtient ainsi une régulation automatique de la basse pression générée par la pompe de gavage 62, qui dépend du différentiel de pression entre les circuits haute pression limitée 40 et basse pression 44. Une trop faible pression dans le circuit basse pression 44 augmente la puissance du moteur 64, ce qui remonte la vitesse de la pompe 62 ainsi que le niveau de cette pression. A l'inverse une trop forte pression dans le circuit basse pression 44 diminue la vitesse de cette pompe 62, ce qui redescend ce niveau de pression.

Un clapet de limitation de pression 68 dans le circuit basse pression 44, disposé en parallèle de la pompe de gavage 62, comporte un ressort de tarage qui ouvre ce clapet si la basse pression est nettement trop forte afin de refouler du fluide dans le réservoir 60, ce qui assure une sécurité.

Pour effectuer la purge du circuit hydraulique, le circuit haute pression limitée 40 comporte un orifice de tirage du vide 70 équipé d'un clapet anti-retour de sortie permettant uniquement une sortie de l'air. Un clapet anti-retour de communication 72 disposé entre les circuits basse pression 44 et haute pression limitée 40, permet seulement un passage de la basse vers la haute pression.

De plus la pompe de gavage 62 comporte un dispositif de blocage 66 agissant sur le moteur hydraulique 64, qui bloque cette pompe par l'intermédiaire du moteur.

Le procédé de purge du circuit hydraulique complètement assemblé est le suivant. Après avoir bloqué la pompe de gavage 62 avec le dispositif de blocage 66 et rempli le réservoir de puisage 60, on effectue un tirage du vide par l'orifice de tirage 70 à l'aide d'un outillage d'atelier comprenant une pompe à vide, le clapet de cet orifice permettant seulement un passage dans ce sens.

Une deuxième électrovanne de puissance 28 disposée entre les circuits très haute pression 42 et haute pression limitée 40 étant ouverte, l'air est alors aspiré à la fois dans ces deux circuits haute pression, et dans le circuit basse pression 44 en passant par le clapet de communication 72 qui permet un passage dans ce sens. On notera que la pompe 62 étant bloquée, elle ne laisse pas passer le fluide venant du réservoir 60 vers le circuit basse pression 44.

Une fois le vide réalisé, on débloque la pompe 62 en agissant sur le dispositif de blocage 66, ce qui permet au vide des trois circuits 40, 42, 44 d'aspirer le fluide venant du réservoir 60, en passant par cette pompe qui peut librement tourner, et par le clapet de communication 72 pour remplir les circuits haute pression. On a alors un remplissage rapide du circuit hydraulique complet, qui est effectué en une seule opération.

La basse pression fournie par le réservoir à la pression atmosphérique 60 et la pompe de gavage 62, a pour avantage particulier comparé à d'autres solutions comportant une basse pression maintenue dans un accumulateur fermé, de permettre un processus naturel de dégazage du fluide revenant dans ce réservoir. Le fluide repart ensuite vers la basse puis la haute pression par la pompe de gavage 62, avec un faible taux de gaz qui lui permet d'absorber plus facilement les gaz rencontrés dans ces circuits.

Le bloc des machines 2 comporte la pompe 20 qui refoule le fluide vers le circuit très haute pression 42 en passant par une première électrovanne de puissance 26 comportant au repos un clapet anti-retour donnant un passage libre vers ce circuit très haute pression, et lorsqu'elle est commandée un passage libre dans les deux sens.

Le clapet anti-retour de la première électrovanne 26 empêche une alimentation involontaire de la pompe 20 par le circuit haute pression 42, qui générerait un couple dans cette pompe, ce qui évite d'avoir à annuler la cylindrée variable de cette machine.

Le circuit très haute pression 42 alimente directement la machine hydraulique 22.

Un capteur de pression 36 mesure directement la pression dans le circuit très haute pression 42, afin de renseigner le système de commande de la transmission du véhicule hybride, pour en particulier assurer le pilotage des deux machines 20, 22 lorsque l'accumulateur 46 est isolé.

Un clapet anti-retour de recirculation 30 est disposé entre l'entrée de la pompe 20 et le circuit très haute pression 42, permettant un passage libre vers ce dernier circuit.

Le clapet de recirculation 30 permet lorsque l'accumulateur 46 est isolé avec la deuxième électrovanne de puissance 28 fermée, de faire fonctionner la machine hydraulique 22 en pompe en prélevant une puissance sur la transmission 4, et la pompe 20 en moteur en délivrant une puissance sur cette transmission, après avoir commandé la première électrovanne 26.

Le clapet de recirculation 30 permet ainsi d'éviter une surpression dans la sortie de la machine hydraulique 22 qui bloquerait ces machines.

La deuxième électrovanne de puissance 28 disposée entre le circuit haute pression limitée 40 et le circuit très haute pression 42, comporte dans une position repos un passage libre entre ces deux circuits, et dans une position activée un clapet anti-retour permettant seulement un passage vers ce deuxième circuit.

La deuxième électrovanne de puissance 28 permet quand elle est fermée, aux machines 20, 22 de travailler entre elles avec une très haute pression pouvant être nettement supérieure à la pression de fonctionnement de l'accumulateur 46, qui reste limitée à un seuil.

On peut ainsi en particulier travailler en boucle fermée avec la pompe 20 entraînée par un moteur thermique du véhicule, qui envoie le fluide à une très haute pression vers la machine hydraulique 22 de manière à obtenir des couples très élevés sur ces deux machines. Le retour en sortie de la machine hydraulique 22 à une basse pression, est alors envoyé en passant par le bloc filtre-échangeur 6 à l'alimentation de la pompe 20.

On notera que les couples très élevés des deux machines 20, 22 permettent d'obtenir des puissances importantes de ces machines, tout en gardant une bonne compacité ainsi qu'une masse réduite.

La deuxième électrovanne de puissance 28 permet aussi d'intervenir pour limiter un pic de pression trop élevé dans le circuit très haute pression 42, en le déchargeant dans l'accumulateur 46.

Une canalisation de commande 32 reliée au circuit haute pression limitée 40, alimente la commande des plateaux oscillants des deux machines 20, 22 afin de régler leurs cylindrées. On notera que l'utilisation de la haute pression limitée qui est plus faible que la très haute pression, permet de réduire le dimensionnement des commandes des deux machines 20, 22, et d'améliorer le rendement en limitant l'énergie consommée.

On peut en particulier prévoir une haute pression limitée comprise entre environ 200bars, et un seuil maximum d'environ 350bars, qui est suffisante pour actionner les différentes commandes ainsi que le moteur 64 de la pompe de gavage 62. La très haute pression 42 peut monter nettement au-dessus de ce seuil.

Chaque machine 20, 22 comporte un drain de retour des fuites 34, qui part de leurs partie basse pression interne pour revenir directement au réservoir 60 du bloc d'alimentation 8.

Ces drains de retour des fuites 34 permettent en particulier un balayage de l'huile dans le carter de ces machines 20, 22, ainsi que leurs refroidissements en donnant un petit débit de fuite minimum qui se dilue et se refroidit dans le réservoir 60, même dans le cas où elle ne comporte pas de débit de fonctionnement en tournant avec une cylindrée nulle.

On peut en particulier calibrer les fuites de ces machines pour obtenir un débit de fuite minimum assurant le refroidissement, qui est compensé par l'apport de la pompe de gavage 62.

Le réservoir 60 joue ainsi un rôle de refroidissement des machines 20 22 ainsi que de dépollution de ces machines, en renvoyant le fluide venant d'elles par les drains 34 vers le filtre principal 84 du bloc filtre-échangeur 6, en passant par la pompe de gavage 62.

Le réservoir 60 a aussi un rôle de sécurité dans la mesure où il permet de récupérer le fluide si l'on ferme l'accumulateur 46, et que l'on met les machines 20, 22 à une cylindrée nulle.

Le bloc de stockage d'énergie sécurisée 14 relié au circuit haute pression limitée 40, comporte une électrovanne d'isolation 48 de l'accumulateur 46, comprenant dans une position repos un clapet anti-retour permettant une recharge de cet accumulateur, et dans une position commandée un libre passage permettant sa vidange.

La chambre à gaz de l'accumulateur 46 est reliée à une valve de remplissage de gaz 50 comportant un clapet anti-retour permettant ce remplissage, et à un capteur de pression et de température 54 qui permet d'évaluer l'état de cet accumulateur.

La chambre à gaz de l'accumulateur 46 est reliée de plus à un disque de rupture 52 assurant la sécurité en se perçant automatiquement lors d'une surpression dépassant un seuil pour évacuer le gaz. Le disque de rupture 52 peut aussi être doublé d'un fusible thermique qui ouvre le passage automatiquement au-dessus d'un seuil de température.

Le bloc de stockage d'énergie 14 avec tous ses équipements est enfermé dans une enceinte de sécurité 56 prévue pour résister à des chocs lors d'accidents du véhicule, confinant à l'intérieur l'énergie totale du système, et éjectant vers l'extérieur de manière sûr les gaz en cas d'ouverture du disque de rupture 52. De plus l'électrovanne d'isolation 48 normalement fermée assure en cas d'absence de commande, une isolation de l'accumulateur 46 par rapport au reste du circuit.

Par ailleurs la mesure constante de pression et de température par le capteur 54 relié directement à l'accumulateur 46, donne une information sur l'état de cet accumulateur y compris lorsqu'il est isolé par l'électrovanne 48 qui est fermée, ou lorsque étant vidé de son huile, il est aussi isolé par exemple par une soupape anti-extrusion de la membrane souple séparant les deux chambres, qui ferme la chambre de fluide en laissant un petit volume dans cette chambre en fin de détente de la membrane.

On réalise avec un minimum de composants une optimisation de la sécurité de l'accumulateur de pression 46, qui comporte tous les éléments nécessaires disposés à proximité pour assurer la sécurité dans les conditions particulières de fonctionnement d'un véhicule automobile. On réalise ainsi la sécurité aussi bien des passagers du véhicule, que des personnes extérieures en cas d'accident, notamment des secouristes.

Le bloc filtre-échangeur 6 formant une boucle de traitement du fluide, reçoit pour un fonctionnement normal le retour du débit venant de la machine hydraulique 22, qui est guidé par un premier clapet anti-retour d'entrée 80 vers l'échangeur thermique eau-huile 82 transmettant les calories du fluide vers le circuit de refroidissement à eau du moteur thermique du véhicule.

Le filtre 84 disposé en série à la sortie de l'échangeur thermique 82, renvoie le fluide par un premier clapet anti-retour de sortie 86 vers l'entrée de la pompe 20.

Pour le fonctionnement particulier des machines qui est inversé, la machine hydraulique 22 travaillant en pompe, et la pompe 20 travaillant en moteur refoulant le fluide par son orifice basse pression, ce fluide passe alors par un deuxième clapet d'entrée 88 donnant l'accès à l'échangeur thermique 82. Le fluide traversant après le filtre 84, passe ensuite par un deuxième clapet de sortie 90 qui conduit à l'orifice basse pression de la machine hydraulique 22 travaillant en pompe.

On réalise ainsi avec les quatre clapets 80, 86, 88, 90 un redressement du sens du flux qui peut venir des machines 20, 22 dans un sens ou dans l'autre, afin de faire passer ce flux toujours dans le même sens, dans l'échangeur thermique 82 puis dans le filtre 84, ce qui est indispensable pour le filtre notamment.

On notera que les différents clapets 80, 86, 88, 90 s'ouvrent automatiquement dans le bon sens grâce aux pertes de charge de l'échangeur 82 et du filtre 84 donnant une différence de pression entre l'entrée dans la boucle de traitement, et la sortie qui possède toujours une pression inférieure.

Un capteur de pression et de température 92 donne en permanence des indications sur le fluide dans la partie basse pression de la pompe 20 et de la machine hydraulique 22, qui renseigne notamment sur cette pression pour éviter une cavitation, et sur la température de ces machines pour réaliser une protection thermique.

Le bloc de conjonction-disjonction 10 comporte successivement du circuit très haute pression 42 vers le circuit haute pression limitée 40, un clapet anti-retour 100 qui permet seulement un passage vers la haute pression limitée, puis une restriction de débit 102, et enfin un clapet piloté 104 donnant un passage libre vers le circuit très haute pression, qui peut s'ouvrir dans l'autre sens sous l'effet d'une commande.

Le clapet anti-retour 100 évite quand la deuxième électrovanne de puissance 28 et fermée, une décharge de l'accumulateur 46. On garantit ainsi que cet accumulateur 46 ne sera jamais vide, ce qui permet de disposer toujours d'un débit d'alimentation des commandes des machines 20, 22, et du moteur hydraulique 64 de la pompe de gavage 62

La restriction de débit 102 permet d'isoler relativement les deux circuits très haute pression 42 et haute pression limitée 40, en évitant la transmission d'à-coups hydrauliques et de perturbations excessives de pression, en particulier avec l'accumulateur 46 comportant un faible niveau de pression qui pourrait se remplir rapidement en perturbant la très haute pression 42.

Le clapet piloté 104 est commandé quand la haute pression limitée devient inférieure à un seuil de pression minimum, ce qui permet de garantir le maintien de ce seuil lorsque la deuxième électrovanne de puissance 28 est fermée.

Le débit du bloc de conjonction-disjonction 10 est prévu avantageusement pour compenser sensiblement les consommations permanentes sur le circuit haute pression limitée 40, venant notamment des commandes des machines 20, 22 et du moteur hydraulique 64, afin de limiter la puissance de la pompe de gavage 62 alimentant ces machines au minimum nécessaire.

Les consommations permanentes excluent les consommations occasionnelles donnant des puissances élevées pour alimenter les machines 20, 22, qui se font par la deuxième électrovanne de puissance 28.

Le bloc de sécurité 12 comporte successivement du circuit très haute pression 42 vers le circuit haute pression limitée 40, un disque de rupture 110 limitant la différence entre cette très haute pression et cette haute pression limitée, à une valeur maximum, et un limiteur de pression calibré 112 qui se décharge dans le circuit basse pression, au niveau de la sortie de la machine hydraulique 22.

Le disque de rupture 110 comporte une membrane de résistance calibrée pour avec sa rupture protéger les deux circuits contre une surpression venant d'un côté comme de l'autre. De préférence le disque de rupture 110 supporte une surpression plus importante venant de l'accumulateur 46.

Le disque de rupture 110 peut aussi être doublé d'un fusible thermique qui ouvre le passage automatiquement au-dessus d'un seuil de température.

Quand l'accumulateur de pression 46 est connecté au circuit très haute pression 42 avec la deuxième électrovanne de puissance 28 ouverte, cet accumulateur est protégé par le limiteur de pression calibré 112. Les stratégies de contrôle de cette électrovanne de puissance 28 peuvent aussi protéger l'accumulateur 46, en particulier à partir de la mesure du capteur de pression 54 branché directement dessus.

Quand l'accumulateur de pression 46 est déconnecté du circuit très haute pression 42, qui peut comporter une pression basse ou nulle, cet accumulateur a sa pression qui reste limitée par le limiteur de pression calibré 112, et il est protégé en cas de surpression par le disque de rupture 110 qui peut s'ouvrir vers ce circuit très haute pression.

On notera qu'en cas d'ouverture du disque de rupture 110, le circuit hydraulique peut continuer à fonctionner ce qui évite de mettre le véhicule à l'arrêt, avec toutefois une pression dans le circuit très haute pression 42 qui est limitée par la pression de service admissible dans l'accumulateur 46.

Le circuit hydraulique a aussi pour avantage, en particulier dans le cas d'une motorisation du véhicule hybride comprenant la transmission 4 et les machines 20, 22, installée à l'avant, et l'accumulateur 46 installé au centre ou à l'arrière de ce véhicule, de concentrer la très haute pression à l'avant, et de disposer une canalisation de haute pression limitée 40 courant le long du véhicule pour relier ces machines à cet accumulateur. On réduit ainsi les pertes avec un circuit court pour la très haute pression, et un circuit plus long pour la pression limitée.

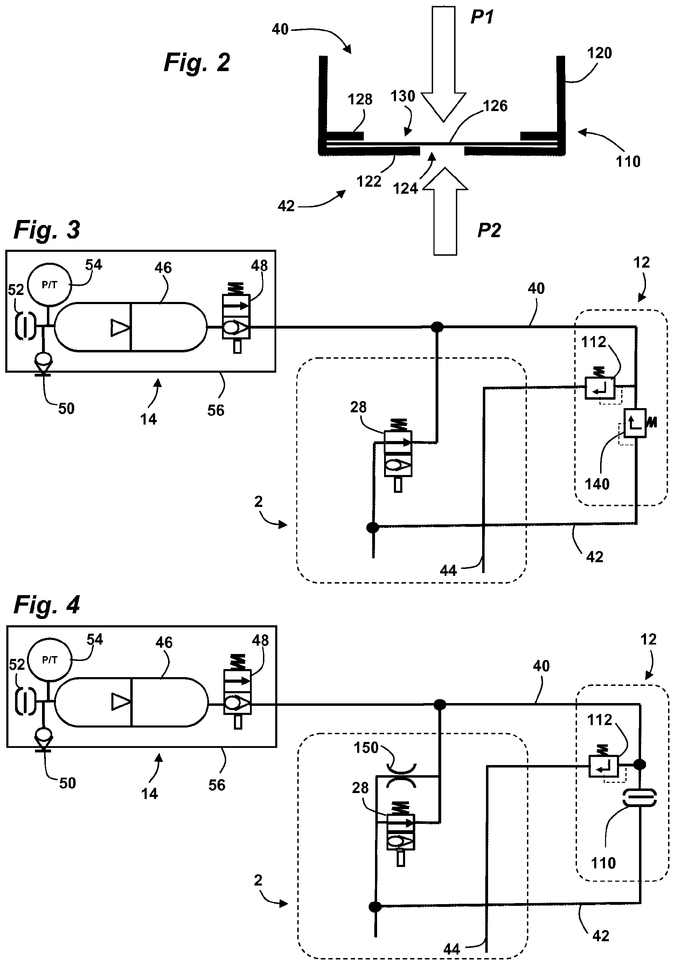

La figure 2 présente un disque de rupture 110 comportant un support 120 de section circulaire disposé dans une canalisation reliant le circuit très haute pression 42 se trouvant en bas, au circuit haute pression limitée 40 se trouvant au-dessus.

Le support 120 comporte une cloison transversale 122 disposant d'un perçage de diamètre réduit 124, recevant une membrane 126 qui est plaquée au-dessus. Le contour de la membrane 126 est recouvert au-dessus par un épaulement 128 formant aussi une cloison transversale, laissant à l'intérieur un perçage de grand diamètre 130.

Le disque de rupture 110 est prévu pour supporter dans chaque sens un différentiel de pression, ce différentiel pouvant être plus important quand la pression supérieure P1 est plus grande que la pression inférieure P2.

Quand la pression supérieure P1 est plus grande, seulement la partie centrale de la membrane 126 correspondant au petit perçage 124 est soumise au différentiel de pression, le reste étant supporté par la cloison 122. La surface du petit perçage 124 étant réduite, la force appliquée sur la membrane 126 en face de ce perçage est aussi réduite pour une même pression. On obtient la rupture avec un différentiel de pression important.

Quand la pression inférieure P2 est plus grande, la partie centrale de la membrane 126 correspondant au grand perçage 130 est soumise au différentiel de pression, le reste étant supporté par l'épaulement 128. La surface du grand perçage 130 étant importante, la force appliquée sur la membrane 126 en face de ce perçage est aussi importante pour une même pression. On obtient la rupture avec un différentiel de pression plus faible que dans le cas précédent.

La figure 3 présente un circuit hydraulique similaire à celui présenté figure 1, comportant comme modification une absence du bloc de conjonction-disjonction 10, et un deuxième limiteur de pression calibré 140 disposé à la place du disque de rupture, qui limite la très haute pression 42 pour envoyer le fluide vers la haute pression limitée 40.

En cas de pic de pression accidentel sur la très haute pression 42, le deuxième limiteur de pression 140 envoie alors le fluide vers l'accumulateur 46.

On réalise ainsi la recharge du circuit haute pression limitée 40, en remplaçant avec le deuxième limiteur de pression 140 le bloc de conjonction-disjonction 10.

Par ailleurs si la pression est trop forte dans le circuit haute pression limitée 40, alors le premier limiteur de pression 112 la fait descendre.

Par ailleurs le deuxième limiteur de pression 140 protège aussi le circuit très haute pression 42 en cas de surpression anormale, en s'ouvrant, et en rejetant le fluide dans le circuit haute pression limitée 40 qui peut être reçu par l'accumulateur 46. Le retour de ce fluide dans l'accumulateur 46 permet de récupérer une énergie.

La figure 4 présente un circuit hydraulique similaire à celui présenté figure 3, comportant comme modification le disque de rupture 110 remis à la place du deuxième limiteur de pression 140, et une restriction de débit 150 disposée en parallèle de la deuxième électrovanne de puissance 28.

La recharge du circuit haute pression limitée 40 se fait de manière continue à partir du circuit très haute pression 42, par la restriction 150 donnant un débit de fuite calculé en fonction des consommations permanentes réalisées sur l'accumulateur 46.

En cas de pression trop importante dans le circuit haute pression limitée 40, venant par exemple d'une différence de pression trop importante sur la restriction 150, alors le premier limiteur de pression 112 rejette du fluide dans le circuit basse pression 44 pour revenir à l'équilibre.

Le disque de rupture 110 intervient comme précédemment, pour protéger les deux circuits 40, 42 d'une surpression accidentelle.

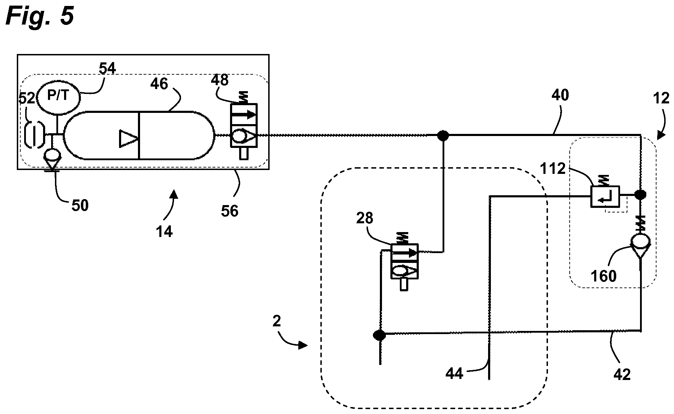

La figure 5 présente un circuit hydraulique similaire à celui présenté figure 3, comportant comme modification un clapet anti-retour équipé d'un ressort de tarage 160, mis à la place du deuxième limiteur de pression 140.

Par le clapet anti-retour taré 160 le flux est bloqué vers la très haute pression 42, mais il est possible dans l'autre sens vers la haute pression limitée 40 à partir d'un écart de pression suffisant pour permettre la compression du ressort de tarage.

On réalise ainsi une protection du circuit très haute pression 42 avec le clapet anti-retour taré 160 qui s'ouvre en cas de surcharge de ce circuit.

Par ailleurs pour les figures 3 et 5, la restriction de débit 150 peut aussi être disposée en parallèle de la deuxième électrovanne de puissance 28, comme présenté figure 4, pour obtenir un débit de fuite de recharge du circuit haute pression limitée 40.

On notera que le deuxième limiteur de pression 140, le clapet anti-retour taré 160 et le disque de rupture 110, ont pour fonction principale de limiter l'écart de pression entre les deux circuits très haute pression 42 et haute pression limitée 40, en protégeant ce premier circuit. Par contre en cas d'ouverture après un pic de pression accidentel, le disque de rupture 110 nécessite une intervention pour le changer, alors que les deux autres éléments ne sont pas détériorés ce qui permet au véhicule de continuer à fonctionner normalement.

D'une manière générale on peut utiliser avec le circuit hydraulique suivant l'invention différents types de transmission, la transmission présentée dans l'art antérieur étant donnée seulement à titre d'exemple d'utilisation de ce circuit hydraulique.

Par son nombre de composants optimisé, ce circuit hydraulique répond en particulier aux contraintes des véhicules automobiles, notamment en ce qui concerne la sécurité, le rendement, la réduction de consommation, les coûts, l'encombrement et la masse, ainsi que la facilité de maintenance.

## Revendications

1. - Circuit hydraulique prévu pour un véhicule hybride disposant d'une machine hydraulique (22) et d'une pompe (20) liées à une transmission (4) entraînant les roues du véhicule, cette machine et cette pompe étant reliées ensemble afin de permettre des échanges directs de fluide qui se font dans un circuit très haute pression (42) ne comportant pas d'accumulateur de pression, dans lequel le circuit très haute pression (42) comporte des moyens de sécurité (110, 140, 160) qui en cas de surpression évacue le fluide vers un circuit de pression limitée (40) équipé d'un accumulateur de pression (46), **caractérisé en ce que** la pression dans le circuit de pression limitée (40) est comprise entre 200 et 350 bars, la pression dans le circuit très haute pression (42) est supérieure à 350 bars et les moyens de sécurité comportent un disque de rupture (110) qui s'ouvre pour un différentiel de pression dépassant une limite.

2. - Circuit hydraulique selon la revendication 1, **caractérisé en ce que** le disque de rupture (110) s'ouvre pour des seuils de différentiels de pression qui changent suivant le sens, ce seuil étant plus élevé quand la pression du circuit de pression limitée (40) est supérieure.

3. - Circuit hydraulique selon la revendication 2, **caractérisé en ce que** le disque de rupture (110) comporte une membrane (126) séparant les deux circuits, reposant de chaque côté sur des cloisons de surfaces différentes pour obtenir un seuil de rupture différent.

4. - Circuit hydraulique selon la revendication 3, **caractérisé en ce que** le disque de rupture (110) comporte un support (120) de section circulaire, recevant à l'intérieur la membrane (126) qui est en appui de chaque côté sur deux cloisons transversales (122, 128) disposant de perçages axiaux (124, 130) de diamètres différents.

5. - Circuit hydraulique selon l'une quelconque des revendications précédentes, **caractérisé en ce que** les moyens de sécurité comportent un limiteur de pression calibré (140) qui se décharge dans le circuit de pression limitée (40).

6. - Circuit hydraulique selon l'une quelconque des revendications précédentes, **caractérisé en ce que** les moyens de sécurité comportent un clapet anti-retour taré (160) bloquant le flux vers la très haute pression (42), qui s'ouvre dans l'autre sens à partir d'un écart de pression suffisant.

7. - Circuit hydraulique selon l'une quelconque des revendications précédentes, **caractérisé en ce que** la recharge du circuit de pression limitée (40) pour compenser ses consommations permanentes, s'effectue par le circuit très haute pression (42) en passant par une restriction de débit (150) constamment ouverte.

8. - Véhicule automobile hybride disposant d'une chaîne de traction utilisant l'énergie hydraulique, équipée d'un circuit hydraulique, **caractérisé en ce que** ce circuit est réalisé selon l'une quelconque des revendications précédentes.

## Patentansprüche

1. Hydraulikkreislauf, vorgesehen für ein Hybridfahrzeug, das über eine hydraulische Maschine (22) und eine Pumpe (20) verfügt, die mit einem Getriebe (4) verbunden sind, das die Räder des Fahrzeugs antreibt, wobei diese Maschine und diese Pumpe miteinander verbunden sind, um direkte Austausche von Fluid, die in einem Kreislauf unter sehr hohem Druck (42), der keinen Druckspeicher umfasst, zu erlauben, wobei der Kreislauf unter sehr hohem Druck (42) Sicherungsmittel (110, 140, 160) umfasst, die im Falle von Überdruck das Fluid in einen Kreislauf unter begrenztem Druck (40), der mit einem Druckspeicher (46) ausgestattet ist, ableiten, **dadurch gekennzeichnet, dass** der Druck in dem Kreislauf unter begrenztem Druck (40) im Bereich von 200 und 350 bar liegt, der Druck in dem Kreislauf unter sehr hohem Druck (42) oberhalb von 350 bar liegt und die Sicherungsmittel eine Berstscheibe (110) umfassen, die sich bei einem Druckunterschied, der eine Grenze überschreitet, öffnet.

2. Hydraulikkreislauf nach Anspruch 1, **dadurch gekennzeichnet, dass** die Berstscheibe (110) sich bei Schwellendruckunterschieden öffnet, die sich der Fahrrichtung folgend ändern, wobei diese Schwelle höher liegt, wenn der Druck des Kreislaufs unter begrenztem Druck (40) darüber liegt.

3. Hydraulikkreislauf nach Anspruch 2, **dadurch gekennzeichnet, dass** die Berstscheibe (110) eine Membran (126) umfasst, die die zwei Kreisläufe trennt, die auf jeder Seite auf Trennwänden von unterschiedlichen Oberflächen aufliegt, um eine unterschiedliche Bruchschwelle zu erhalten.

4. Hydraulikkreislauf nach Anspruch 3, **dadurch gekennzeichnet, dass** die Berstscheibe (110) einen Träger (120) mit kreisförmigem Querschnitt umfasst, der im Inneren die Membran (126) aufnimmt, die an jeder Seite auf zwei querlaufenden Trennwänden (122, 128), die über axiale Bohrungen (124, 130) von unterschiedlichen Durchmessern verfügen, abgestützt ist.

5. Hydraulikkreislauf nach einem der vorstehenden Ansprüche, **dadurch gekennzeichnet, dass** die Sicherungsmittel einen kalibrierten Druckbegrenzer (140) umfassen, der sich in den Kreislauf unter begrenztem Druck (40) entlädt.

6. Hydraulikkreislauf nach einem der vorstehenden Ansprüche, **dadurch gekennzeichnet, dass** die Sicherungsmittel ein austariertes Rückschlagventil (160) umfassen, das die Strömung zu dem sehr hohen Druck (42), der sich ab einem genügenden Druckabstand in die andere Richtung öffnet, blockiert.

7. Hydraulikkreislauf nach einem der vorstehenden Ansprüche, **dadurch gekennzeichnet, dass** das Aufladen des Kreislaufs unter begrenztem Druck (40), zum Kompensieren seines permanenten Verbrauchs, durch den Kreislauf unter sehr hohem Druck (42) über eine ständig geöffnete Durchflussbegrenzung (150) erfolgt.

8. Hybridkraftfahrzeug, das über einen Antriebsstrang verfügt, der hydraulische Energie nutzt, ausgestattet mit einem Hydraulikkreislauf, **dadurch gekennzeichnet, dass** dieser Kreislauf nach einem der vorstehenden Ansprüche verwirklicht ist.

## Claims

1. Hydraulic circuit designed for a hybrid vehicle, having a hydraulic machine (22) and a pump (20) both connected to a transmission (4) driving the wheels of the vehicle, this machine and pump being connected together to allow direct exchanges of fluid that take place in a very high pressure circuit (42) not comprising any pressure accumulator, in which the very high pressure circuit (42) comprises safety means (110, 140, 160) which, in the event of overpressure, discharges the fluid to a limited-pressure circuit (40) equipped with a pressure accumulator (46), **characterised in that** the pressure in the limited-pressure circuit (40) is between 200 and 350 bar, the pressure in the very high pressure circuit (42) is greater than 350 bar and the safety means comprise a rupture disc (110) that opens at a pressure differential exceeding a limit.

2. Hydraulic circuit according to claim 1, **characterised in that** the rupture disc (110) opens at pressure differential thresholds that change according to the direction, this threshold being higher when the pressure of the limited-pressure circuit (40) is greater.

3. Hydraulic circuit according to claim 2, **characterised in that** the rupture disc (110) comprises a membrane (126) separating the two circuits, resting on each side on partitions with different surface areas in order to obtain a different rupture threshold.

4. Hydraulic circuit according to claim 3, **characterised in that** the rupture disc (110) comprises a support (120) with a circular cross-section, receiving the membrane (126) inside, which is in abutment on each side on two transverse partitions (122, 128) having axial piercings (124, 130) with different diameters.

5. Hydraulic circuit according to any of the preceding claims, **characterised in that** the safety means comprise a calibrated pressure limiter (140) that discharges into the limited-pressure circuit (40).

6. Hydraulic circuit according to any of the preceding claims, **characterised in that** the safety means comprise a calibrated non-return valve (160) blocking the flow to the very high pressure (42), which opens in the other direction as from a sufficient pressure difference.

7. Hydraulic circuit according to any of the preceding claims, **characterised in that** the recharging of the limited-pressure circuit (40) to compensate for its continuous consumption takes place through the very high-pressure circuit (42), passing through a continuously open flow restriction (150).

8. Hybrid motor vehicle having a traction chain using hydraulic energy, equipped with a hydraulic circuit, **characterised in that** this circuit is produced according to any of the preceding claims.
